# EUROPÄISCHE PATENTSCHRIFT

(11) **EP 2 866 956 B1**
(45) Veröffentlichungstag und Bekanntmachung des Hinweises auf die Patenterteilung: **29.06.2016**
(21) Anmeldenummer: 13742153.3
(22) Anmeldetag: 27.06.2013
(51) Int. Cl.: B08B 9/049, F16L 55/26

(54) **SPÜLKOPF**
FLUSHING HEAD
TÊTE DE LAVAGE

(30) Priorität: 27.06.2012 DE 202012006180 U
(43) Veröffentlichungstag der Anmeldung: 06.05.2015
(73) Patentinhaber: Pläsier, Arnold, 26506 Norden-Leegemoor (DE); Wenk, Christoph, 26524 Hage (DE)
(72) Erfinder: VAN DÜLLEN, Udo, 26524 Hage (DE)
(74) Vertreter: Busse & Busse
(86) Internationale Anmeldenummer: PCT/EP2013/001887
(87) Internationale Veröffentlichungsnummer: WO 2014/000888

(56) Entgegenhaltungen:
- DE-A1- 19 607 913
- US-A1- 2005 275 725
- US-A1- 2010 208 055

## Beschreibung

Die vorliegende Erfindung betrifft einen Gegenstand nach dem Oberbegriff des Anspruchs 1.

Im Stand der Technik sind Spülköpfe für die Untersuchung und Reinigung von Regen-, Betriebs- oder Wasserkanälen bekannt, die einen Anschluss für einen Spülschlauch aufweisen, zumindest eine Düse zum Vortrieb des Spülkopfes und zum Spülen der Kanäle sowie eine Kamera umfassen.

DE-A-196 07 913 offenbart einen solchen Spülkopf, der alle Merkmale des Oberbegriffs des Anspruchs 1 beinhaltet.

Während seines Betriebs ist ein solcher Spülkopf ständig starken Vibrationen ausgesetzt, der Spülkopf schlägt gegen die Kanalwand, gegen Hindernisse und ist vom Wasserdruck erzeugten Vibrationen ausgesetzt. Je nach der Art der untersuchten Kanäle, deren Verschmutzungsgrad und den eingesetzten Wasserdrücken kann es aufgrund der Schläge gegen das Gehäuse zu einer Beschädigung der Kamera kommen.

Es ist daher Aufgabe der vorliegenden Erfindung, die Anordnung einer Kamera im Spülkopf sicherer zu gestalten.

Die Aufgabe wird gelöst durch einen Gegenstand nach Anspruch 1. Vorteilhafte Ausgestaltungen der Erfindung lassen sich auf den auf Anspruch 1 rückbezogenen Unteransprüchen sowie der nachfolgenden Beschreibung entnehmen.

Erfindungsgemäß ist vorgesehen, die Kamera unter Verzicht auf weitere unmittelbar an ihr angeordnete Tragelemente in einer Dämpfungsmasse im Gehäuse des Spülkopfes anzuordnen, so dass sie gedämpft in dem Spülkopf angeordnet ist. Die Dämpfungsmasse kann bei Herstellung der Kamera je nach Verwendung der Kamera unterschiedlich hart und somit unterschiedlich stark dämpfend eingestellt werden. Über die Dämpfungsmasse erfolgt die Anbindung der Kamera in dem Spülkopfgehäuse.

Als Dämpfungsmasse können auch Kombinationen mehrerer dämpfender Materialien Verwendung finden, die die Kamera per Form- oder Kraftschluss halten und ihrerseits selbst in dem Gehäuse des Spülkopfes unmittelbar oder mittelbar über Tragelemente festgelegt sind.

Vorzugsweise handelt es sich bei der Dämpfungsmasse um eine Vergussmasse, die die Kamera in weiten Teilen umgibt. Hierbei kann bevorzugt ein Hotmelt-Material, unter Umständen jedoch auch eine Kaltvergussmasse verwendet werden. Insbesondere kann die Kamera bis auf Teile der Linse und des Objektivs vollständig von der Dämpfungsmasse umschlossen sein. Hierdurch ergibt sich neben der Dämpfung eine zusätzliche Kapselung der Kamera.

Die Dämpfungsmasse kann in einer Ausnehmung des Spülkopfgehäuses formschlüssig angeordnet sein, so dass über die Anlageflächen eine Lagerung der Kamera in korrekter Stellung bewirkt wird.

Vorteilhafterweise ist der Spülkopf jedoch mit einem Rahmenelement versehen, durch das die Dämpfungsmasse mit der Kamera im Gehäuse festgelegt ist und das insbesondere ohne unmittelbaren Kontakt zur Kamera zumindest einen in die Vergussmasse hineinreichenden Flansch aufweist. Alternativ kann das Rahmenelement auch über eine kraftschlüssige Verbindung mit der Dämpfungsmasse verbunden, also z.B. geklebt sein. Während die Kamera selbst somit quasi rahmenlos aufgehängt bzw. vergossen ist, ist die Dämpfungsmasse ihrerseits über ein Rahmenelement eindeutig am Gehäuse festlegbar. Eine Einwirkung von Vibrationen auf die Kamera kann somit nur über das Rahmenelement und nicht über etwaige andere Formschlüsse des Gehäuses mit der Dämpfungsmasse erfolgen.

Der Ausbildung der Dämpfungsmasse kommt eine besondere Sorgfalt zu. Vorzugsweise handelt es sich hierbei um ein Kunststoffmaterial mit einer Shorehärte A von 60 bis 100, vorzugsweise von 75 bis 85 bzw. von einer Shore-Härte D von rund 40 bis 60, vorzugsweise von 45 bis 55. Bei diesen Shore-Härten werden die erfahrungsgemäß im Betrieb auftretenden Vibrationen ausreichend gedämpft, so dass die Kamera gerade auch in einem Langzeitbetrieb unbeschädigt bleibt.

Zur besseren Festlegung der Dämpfungsmasse in dem Rahmenelement verfügt dieses über einen in der Dämpfungsmasse angeordneten Widerhaken, der Teil eines zugehörigen Flansches ist.

Darüber hinaus kann das Rahmenelement über wenigstens einen weiteren Dämpfer am Gehäuse festgelegt werden, so dass die Kamera doppelt gelagert ist. Beispielsweise handelt es sich bei dem Dämpfer um eine Gummihülse, die zwischen Rahmenelement und Gehäuse anzuordnen ist.

Zur wiederum verbesserten Festlegung der Dämpfungsmasse und somit der Kamera ist das Rahmenelement mit einer zentralen Ausnehmung versehen, in der die Dämpfungsmasse zumindest teilweise angeordnet ist.

Durch die Einbringung der Kamera in eine Dämpfungsmasse bzw. insbesondere in eine Vergussmasse ist die Kamera nicht nur gedämpft angeordnet sondern gleichzeitig auch gegen Eindringen von Feuchtigkeit abgesichert. Zur Anbringung der Kameraelektronik ist ein aus der Dämpfungsmasse vorstehender bzw. in diese integrierter Stecker vorhanden, der die Kamera mit einer Daten- und/oder Versorgungsleitung verbindet.

Um eine Beschädigung einer zur Kamera zugehörigen Platine zu vermeiden ist diese ebenfalls in der Dämpfungsmasse mit angeordnet und entsprechend von der Dämpfungsmasse vorzugsweise auch komplett umschlossen.

In einer weiteren vorteilhaften Ausbildung der Erfindung, bei der die auf die Kamera einwirkenden Erschütterungen besser nachvollzogen werden können und bei der eine Lage des Spülkopfes bzw. der Kamera in einem Abwasserkanal besser bestimmt werden kann, ist ein Sensor zur Ermittlung von Erschütterungs- und/oder Lageinformationen vorgesehen. Insbesondere kann es sich bei diesem Sensor um einen Drehratensensor handeln, dessen Daten zusammen mit dem Kamerasignal zu einer computerunterstützten Bedieneinheit übermittelt werden können.

Zu Wartungs- und Austauschzwecken ist es vorteilhaft, wenn ein die Kamera umfassender Teil des Spülkopfes als Kamerakopf über lösbare Befestigungsmittel an dem Rest des Spülkopfes befestigt ist und die Elektronik des Kamerakopfes über eine Steckverbindung mit dem Rest des Spülkopfes verbindbar bzw. an diesen angebunden ist. Dies hat darüber hinaus den Vorteil, dass bei einer Beschädigung von Daten- oder Versorgungsleitungen, in deren Umhüllung Wasser eindringt, über die Steckverbindung ein weiteres Vordringen des Wassers in die Kamera vermieden werden kann.

Weitere Vorteile und Einzelheiten der Erfindung lassen sich der nachfolgenden Figurenbeschreibung entnehmen.

In den Figuren zeigt:
- Fig. 1: einen erfindungsgemäßen Spülkopf im Betrieb,
- Fig. 2: einen Schnitt durch einen weiteren erfindungsgemäßen Spülkopf,
- Fig. 3: einen Teil des Gegenstands nach Fig. 2
- Fig. 4: den Gegenstand nach Fig. 3 in perspektivischer Ansicht
- Fig. 5: einen weiteren Teil des erfindungsgemäßen Gegenstands nach Fig. 2.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zu erfindungsgemäßen Weiterbildungen führen.

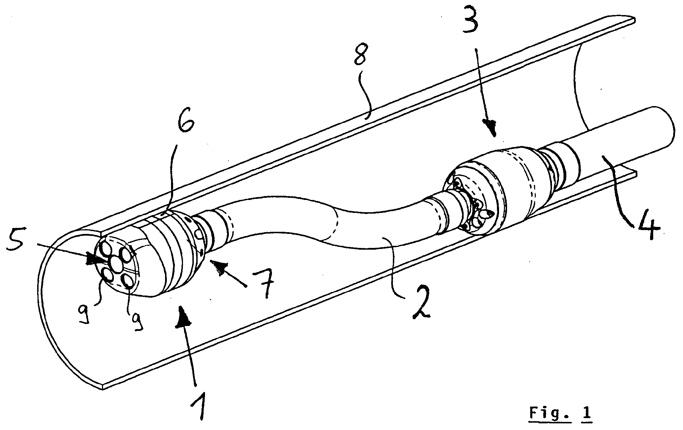

Ein erfindungsgemäßer Spülkopf 1 ist im Betrieb (Fig. 1) typischerweise an einem Spülschlauch 2 angeschlossen. Dieser Spülschlauch 2 ist vorliegend von einer Drehvorrichtung 3 unterbrochen, die den Spülkopf mitsamt dem daran befindlichen Schlauch 2 drehen kann. Von der Drehvorrichtung 3 führt ein weiterer Teil 4 des Spülschlauchs hin zu einem Spülwagen, von dem aus der Spülkopf geführt werden kann. Typischerweise umfasst eine Steuerungsvorrichtung für einen erfindungsgemäßen Spülkopf ein Computersystem, welches Steuermittel für den Spülkopf 1 und Anzeigemittel zum Darstellen eines Bildes einer Kamera 5 sowie weiterer Sensordaten umfasst.

Über eine Führungsfläche 6 bewegt sich der aufgrund des Rückstoßes durch Düsen 7 hoch gedrückte Spülkopf entlang der Scheitelfläche eines Regen-, Betriebs- oder Abwasserkanals, der hier durch einen Rohrausschnitt 8 dargestellt ist.

In dem vorderen Teil des Spülkopfes, der durch einen Kamerakopf gebildet wird, sind um die Kamera 5 herum Beleuchtungsmittel 9 angeordnet, die den im Kamerablickfeld befindlichen Bereich ausleuchten.

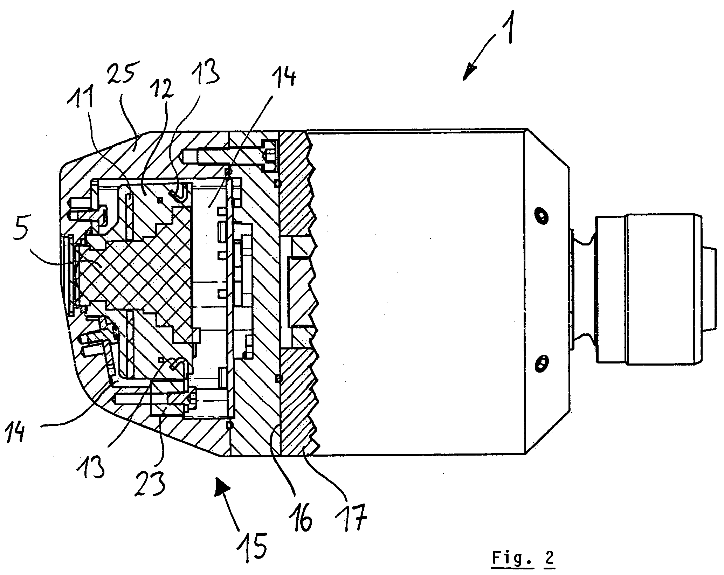

Zur Dämpfung der Kamera ist diese genau wie in dem Ausführungsbeispiel der Fig. 2, welches eine teilweise aufgebrochene Ansicht eines weiteren erfindungsgemäßen Spülkopfes zeigt, gedämpft im Spülkopf angeordnet. Hierzu ist die Kamera 5 mitsamt ihrer Platine 11 in einer Dämpfungsmasse 12 angeordnet. Bei der Dämpfungsmasse 12 handelt es sich um eine Vergussmasse. Diese kann vorzugsweise auf Basis von Polyurethan, von Polyamid oder Polyolefinen ausgebildet sein. Für die einfache Verarbeitung bietet sich eine Vergussmasse auf Basis von Polyamid oder Polyolefin an.

Die Dämpfungsmasse 12 ist mit der Kamera 5 in einem Widerhaken 13 aufweisenden Rahmenelement 22 in einem Hohlraum 14 des Kamerakopfes 15 angeordnet. Der Kamerakopf 15 selbst ist über nicht weiter dargestellte Schraubmittel entlang der Trennlinie 16 an dem weiteren Gehäuse 17 des Spülkopfes 1 befestigt.

Eine Trennung des Kamerakopfes 15 vom weiteren Gehäuse 17 des Spülkopfes 1 führt zum Freiliegen von nicht weiter sichtbaren Steckkontakten, über die die Kameraelektronik mit der weiteren Elektronik des Spülkopfes 1 verbunden ist.

Die Kamera 5 ist bis auf einen Bereich dicht bei einer Linse 18 im Wesentlichen komplett von der Vergussmasse bzw. der Dämpfungsmasse 12 umschlossen. Dies gilt auch für eine flache Schicht 19 des Vergussmaterials auf der der Linse 18 entgegengesetzten Seite der Kamera. Dort kann allerdings ein Stecker 21 angeordnet sein, über den die Kamera angeschlossen werden kann und der aus der Vergussmasse herausschaut.

Das Rahmenelement 22, welches über Widerhaken 13 die Dämpfungsmasse 12 im festlegt, ist seinerseits über Dämpfer 23 am Gehäuse gelagert. Mithin ist die Kamera 5 doppelt gedämpft im Gehäuse 25 des Spülkopfes angeordnet.

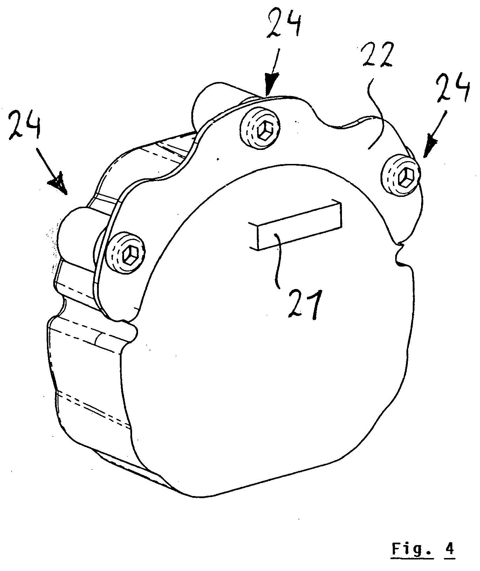

Im vorliegenden Ausführungsbeispiel weist das Rahmenelement 22 drei Befestigungspunkte 24 zur Festlegung des Rahmenelements 22 am Gehäuse 25 auf (Fig. 4).

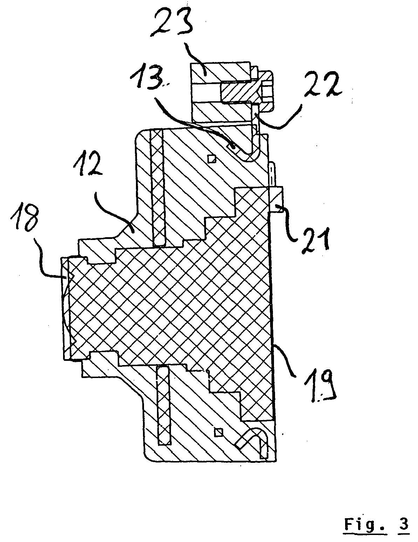

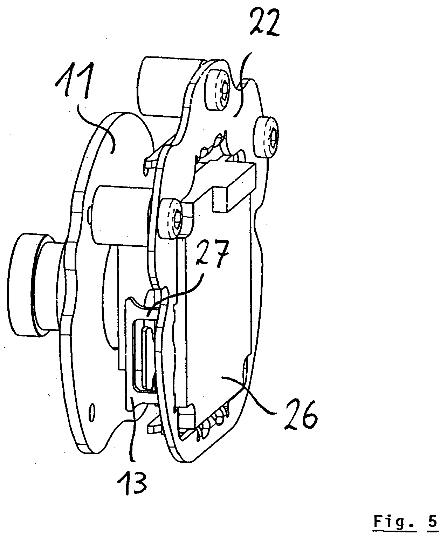

In der Fig. 5 ist der Gegenstand nach Fig. 3 ohne die Vergussmasse dargestellt. Aus dieser perspektivischen Ansicht ist ersichtlich, dass das Rahmenelement 22 eine Ausnehmung aufweist, in die ein Teil der Kamera 5, insbesondere eine Platine 26, die genauso wie die Platine 11 umgossen ist, eingebracht ist. Das Rahmenelement 22 umschließt mithin die Kamera in Umfangsrichtung, wobei zusätzlich zu den Widerhaken ein überwiegender Teil des beispielsweise aus Stahlblech bestehenden Rahmenelements 22 mit von der Vergussmasse umschlossen ist und die Kamera sicher festlegt. Darüber hinaus weist das Rahmenelement mit den Widerhaken 12 versehene Flansche 27 auf, die auf allen vier Seiten der Platine 26 zu finden sind und das Rahmenelement mit der Dämpfungsmasse sicher verbinden.

Auf der Platine 11 kann schließlich noch ein Drehratensensor (nicht abgebildet) angeordnet sein.

## Patentansprüche

1. Spülkopf für die Inspektion und Reinigung von Regen-, Betriebs- oder Abwasserkanälen, mit einem Anschluss für einen Spülschlauch (2), zumindest einer Düse (7) zum Vortrieb des Spülkopfes und zum Spülen der Kanäle (8), sowie mit einer Kamera (5), **dadurch gekennzeichnet, dass** die Kamera (5) unter Verzicht auf weitere unmittelbar an ihr angeordnete Tragelemente in einer Dämpfungsmasse (12) im Gehäuse (25) des Spülkopfes (1) angeordnet ist.

2. Spülkopf nach Anspruch 1, **dadurch gekennzeichnet, dass** die Dämpfungsmasse (12) eine Vergußmasse ist.

3. Spülkopf nach Anspruch 2, **gekennzeichnet durch** ein Rahmenelement (22), **durch** das die Dämpfungsmasse (12) mit der Kamera (5) im Gehäuse (25) festgelegt ist und das insbesondere ohne unmittelbaren Kontakt zur Kamera (5) zumindest einen in die Vergußmasse hineinreichenden Flansch (27) aufweist.

4. Spülkopf nach Anspruch 3, **dadurch gekennzeichnet, dass** der Flansch (27) des Rahmenelements über zumindest einen Widerhaken (13) in der Dämpfungsmasse (12) verfügt.

5. Spülkopf nach Anspruch 3 oder 4, **dadurch gekennzeichnet, dass** das Rahmenelement (22) über wenigstens einen Dämpfer (23) am Gehäuse (25) festgelegt ist.

6. Spülkopf nach einem der Ansprüche 3 bis 5, **dadurch gekennzeichnet, dass** das Rahmenelement (22) eine zentrale Ausnehmung aufweist, in der die Dämpfungsmasse (12) zumindest teilweise angeordnet ist.

7. Spülkopf nach einem der vorherigen Ansprüche, **dadurch gekennzeichnet, dass** ein aus der Dämpfungsmasse (12) hervorstehender Stecker (21) zur Verbindung der Kamera (5) mit einer Daten- und/oder Versorgungsleitung vorgesehen ist.

8. Spülkopf nach einem der vorherigen Ansprüche, **dadurch gekennzeichnet, dass** die Kamera (5) zusammen mit ihrer Platine (26,11) in der Dämpfungsmasse (12) angeordnet ist.

9. Spülkopf nach einem der vorherigen Ansprüche, **gekennzeichnet durch** einen Sensor zur Ermittlung von Erschütterungs- und/oder Lageinformationen.

10. Spülkopf nach Anspruch 8, **dadurch gekennzeichnet, dass** der Sensor als Drehratensensor ausgebildet ist.

11. Spülkopf nach einem der vorherigen Ansprüche, **dadurch gekennzeichnet, dass** ein die Kamera (5) umfassender Teil des Spülkopfes als Kamerakopf (15) über lösbare Befestigungsmittel an dem Rest des Spülkopfes (1) befestigt ist und die Elektronik des Kamerakopfes (15) über eine Steckverbindung mit dem Rest des Spülkopfes angebunden ist.

## Claims

1. Flushing head for inspecting and cleaning rainwater channels, service water channels or sewers, comprising a connection for a flushing hose (2), at least one nozzle (7) for propelling the flushing head and for flushing the channels (8), and comprising a camera (5), **characterised in that** the camera (5) is arranged in a damping substance (12) in the housing (25) of the flushing head (1) without further support elements being arranged directly thereon.

2. Flushing head according to claim 1, **characterised in that** the damping substance (12) is a casting compound.

3. Flushing head according to claim 2, **characterised by** a frame element (22), by means of which the damping substance (12) is fixed in the housing (25) together with the camera (5) and which comprises at least one flange (27) which extends into the casting compound, in particular without making direct contact with the camera (5).

4. Flushing head according to claim 3, **characterised in that** the flange (27) of the frame element comprises at least one barb (13) in the damping substance (12).

5. Flushing head according to either claim 3 or claim 4, **characterised in that** the frame element (22) is fixed to the housing (25) by means of at least one damper (23).

6. Flushing head according to any of claims 3 to 5, **characterised in that** the frame element (22) comprises a central recess in which the damping substance (12) is arranged at least in part.

7. Flushing head according to any of the preceding claims, **characterised in that** a connector (21) projecting out of the damping substance (12) is provided for connecting the camera (5) to a data line and/or supply line.

8. Flushing head according to any of the preceding claims, **characterised in that** the camera (5) is arranged, together with the printed circuit board (26, 11) thereof, in the damping substance (12).

9. Flushing head according to any of the preceding claims, **characterised by** a sensor for detecting information relating to shocks and/or position.

10. Flushing head according to claim 8, **characterised in that** the sensor is in the form of a rotational speed sensor.

11. Flushing head according to any of the preceding claims, **characterised in that** a part of the flushing head that comprises the camera (5) is fastened in the form of a camera head (15) to the remainder of the flushing head (1) by detachable fastening means, and the camera head (15) electronics are connected to the remainder of the flushing head by means of a plug-in connection.

## Revendications

1. Tête de rinçage pour la vérification et le nettoyage de canaux pour eau de pluie, eau de service ou eaux usées, comprenant un raccord pour un tuyau de rinçage (2), au moins une buse (7) pour faire avancer la tête de rinçage et pour rincer les canaux (8), ainsi qu'une caméra (5), **caractérisée en ce que** la caméra (5) est disposée dans le boîtier (25) de la tête de rinçage (1) dans une masse d'amortissement (12), en renonçant à tout autre élément de support disposé directement au niveau de celle-ci.

2. Tête de rinçage selon la revendication 1, **caractérisée en ce que** la masse d'amortissement (12) est une masse de scellement.

3. Tête de rinçage selon la revendication 2, **caractérisée par** un élément formant cadre (22) qui fixe la masse d'amortissement (12) avec la caméra (5) dans le boîtier (25) et qui présente en particulier, sans contact direct avec la caméra (5), au moins une bride (27) s'étendant dans la masse de scellement.

4. Tête de rinçage selon la revendication 3, **caractérisée en ce que** la bride (27) de l'élément formant cadre dispose d'au moins une barbelure (13) dans la masse d'amortissement (12).

5. Tête de rinçage selon la revendication 3 ou 4, **caractérisée en ce que** l'élément formant cadre (22) est fixé sur le boîtier (25) par au moins un amortisseur (23).

6. Tête de rinçage selon l'une quelconque des revendications 3 à 5, **caractérisée en ce que** l'élément formant cadre (22) présente un évidement central, dans lequel la masse d'amortissement (12) est disposée au moins en partie.

7. Tête de rinçage selon l'une quelconque des revendications précédentes, **caractérisée en ce qu'**une fiche (21) faisant saillie de la masse d'amortissement (12) est prévue pour relier la caméra (5) à une ligne de données et/ou d'alimentation.

8. Tête de rinçage selon l'une quelconque des revendications précédentes, **caractérisée en ce que** la caméra (5) avec sa platine (26, 11) est disposée dans la masse d'amortissement (12).

9. Tête de rinçage selon l'une quelconque des revendications précédentes, **caractérisée par** un capteur pour déterminer des informations de vibration et/ou de position.

10. Tête de rinçage selon la revendication 8, **caractérisée en ce que** le capteur est réalisé sous forme de capteur de vitesse de rotation.

11. Tête de rinçage selon l'une quelconque des revendications précédentes, **caractérisée en ce qu'**une partie de la tête de rinçage comprenant la caméra (5) est fixée au reste de la tête de rinçage (1) par des moyens de fixation amovibles, et l'électronique de la tête de caméra (15) est rattachée au reste de la tête de rinçage par une fiche de raccordement.
